# EUROPÄISCHE PATENTSCHRIFT

(11) **EP 3 535 787 B1**
(45) Veröffentlichungstag und Bekanntmachung des Hinweises auf die Patenterteilung: **11.08.2021**
(21) Anmeldenummer: 17797267.6
(22) Anmeldetag: 25.10.2017
(51) Int. Cl.: H01M 50/116, H01M 50/20, H01M 50/24, H01M 10/625, B60K 1/04

(54) **KRAFTFAHRZEUG-BATTERIEMODUL, KRAFTFAHRZEUG MIT EINEM ELEKTRISCHEN ANTRIEBSMOTOR UND EINEM BATTERIEMODUL SOWIE VERFAHREN ZUR HERSTELLUNG EINES KRAFTFAHRZEUG-BATTERIEMODULS UND EINES KRAFTFAHRZEUGS**
MOTOR VEHICLE BATTERY MODULE, MOTOR VEHICLE HAVING AN ELECTRIC DRIVE MOTOR AND A BATTERY MODULE AND METHOD FOR PRODUCING A MOTOR VEHICLE BATTERY MODULE AND A MOTOR VEHICLE
MODULE DE BATTERIE DE VÉHICULE AUTOMOBILE, VÉHICULE AUTOMOBILE COMPRENANT UN MOTEUR D'ENTRAÎNEMENT ÉLECTRIQUE ET UN MODULE DE BATTERIE ET PROCÉDÉ DE FABRICATION D'UN MODULE DE BATTERIE ET D'UN VÉHICULE AUTOMOBILE

(30) Priorität: 04.11.2016 EP 16197397
(43) Veröffentlichungstag der Anmeldung: 11.09.2019
(73) Patentinhaber: Fredy Doll Beteiligungs-GmbH, 77855 Achern (DE)
(72) Erfinder: DOLL, Fredy, 77855 Achern (DE)
(74) Vertreter: Patentanwaltskanzlei Cartagena
(86) Internationale Anmeldenummer: PCT/EP2017/077353
(87) Internationale Veröffentlichungsnummer: WO 2018/082989

(56) Entgegenhaltungen:
- WO-A2-2010/135456
- US-A- 5 106 415
- US-A- 5 723 180
- US-A1- 2014 020 969
- US-A1- 2016 211 496

## Beschreibung

### ANWENDUNGSGEBIET UND STAND DER TECHNIK

Die Erfindung betrifft ein Kraftfahrzeug-Batteriemodul mit einem Energiegehalt von mindestens 5 KWh sowie ein Kraftfahrzeug mit einem elektrischen Antriebsmotor und mindestens einem Kraftfahrzeug-Batteriemodul zur Versorgung des Antriebsmotors. Die Erfindung betrifft weiterhin Verfahren zur Herstellung eines Kraftfahrzeug-Batteriemoduls.

Die Elektrifizierung der Antriebe von Kraftfahrzeugen steht unmittelbar vor dem Durchbruch. Zum einen sinken die Batteriepreise pro Kilowattstunde kontinuierlich. Zum anderen stehen immer mehr Elektrotankstellen zur Verfügung. Im Ergebnis wird der Anwendungsbereich von Elektrofahrzeugen immer größer und immer breitere Käuferschichten können sich Elektrofahrzeuge leisten.

Gespeist werden die elektrischen Antriebe von Kraftfahrzeugen in der Regel von Kraftfahrzeug-Batteriemodulen, die aus mehrere Einzelbatterien zusammengesetzt sind, welche wiederum jeweils mindestens eine galvanische Zelle und ein Gehäuse, in der die mindestens eine Zelle enthalten ist, umfassen.

Derzeit kommen in Elektroautos als Einzelbatterien nahezu ausschließlich Lithium-lonen-Batterien zum Einsatz. Batterien dieses Typs besitzen eine hohe Energiedichte, vertragen eine Vielzahl an Ladezyklen und weisen keinen nennenswerten Memory-Effekt auf. Lithium-lonen-Batterien weisen in der Regel in der Kathode ein lithiiertes Übergangsmetalloxid und in der Anode ein zur Interkalation von Lithium befähigtes Material wie Graphit auf. Getränkt sind die Elektroden mit einem flüssigen Elektrolyten.

Bei dem Elektrolyten handelt es sich um eine Lösung eines Leitsalzes. Als Leitsalze kommen hierbei insbesondere fluorierte Leitsalze wie Lithiumhexafluorophosphat zum Einsatz. Als Lösemittel werden meist organische Lösemittel, insbesondere organische Carbonate wie Ethylencarbonat und Propylencarbonat, cyclische Ether wie Tetrahydrofuran oder Mischungen hieraus verwendet.

Problematisch ist, dass fluorierte Leitsalze wie das genannte Lithiumhexafluorophosphat sehr reaktive Verbindungen sind. Tritt ein Elektrolyt mit einem fluorierten Leitsalz aus einer Lithium-Ionen-Batterie aus, so bildet sich bei Kontakt mit Luftfeuchtigkeit Flusssäure. Flusssäure ist bekanntlich eine äußerst ätzende und giftige Substanz. Auf nahezu jegliches Metall wirkt Flusssäure korrosiv. Tritt Flusssäure etwa mit dem Stahl- oder Aluminium-Karosserie eines Kraftfahrzeugs in Kontakt, so sind Schäden durch Korrosion unvermeidlich.

Grundsätzlich sind die Gehäuse der Einzelbatterien eines Kraftfahrzeug-Batteriemoduls gut abgedichtet. Sie bestehen häufig aus geschweißten oder gegossenen Metallbehälter und Metallrahmen, beispielsweise aus Aluminium oder Stahl und weisen eine oder zwei Poldurchführungen auf, über die die mindestens eine galvanische Zelle der Einzelbatterie elektrisch kontaktiert wird. Die Gefahr eines Austritts von Elektrolyt ist nicht sehr groß. Je mehr Einzelbatterien ein Kraftfahrzeug-Batteriemodul allerdings aufweist, desto mehr steigt die Gefahr eines Elektrolytaustritts, insbesondere im Bereich der Poldurchführungen. Auch die im Kraftfahrzeugkontext zu erwartenden Erschütterungen und Vibrationen können zu einem Versagen des Gehäuses und eines Elektrolytaustritts führen.

Korrosive Bestandteile sind auch in Batterien anderer Art vorhanden, so dass bei den meisten Batteriemodulen für den Fahrzeugantrieb grundsätzlich die Gefahr besteht, dass bestimmungsgemäß gekapselte Bestandteile austreten können, welche die Fahrzeugkarosserie schädigen können.

Im Fahrzeugbau wird angestrebt, dass Karosserien über mehrere Jahrzehnte weitgehend frei von Korrosionsschäden bleiben. Dieser Zeitraum liegt derzeit noch über dem Zeitraum, über den Batteriemodule verwendet werden. Es ist daher anzustreben, dass eine Batterie gegen Ende Ihres Nutzungszyklus und unter der damit ansteigende Gefahr des Elektrolytaustritts im Versagensfalle keine Schädigung der weiterverwendbaren Karosserie mit sich bringt.

Aus der US 5723180 A ist es bekannt, Wachse als Korrosionsschutzmittel bei Kraftfahrzeugen einzusetzen.

In der US 2016/211496 A1 (D1) ist beschrieben, ein Batteriemodul in ein Gehäuse einzusetzen und den Zwischenraum zwischen dem Gehäuse und dem Batteriemodul mit Wachs zu füllen. Das Wachs soll hierbei das Batteriemodul vor Sauerstoff schützen und darüber hinaus auch als Wärmepuffer dienen. Aus der WO 2010/135456 A2 sind unterschiedliche Ausführungsformen eines Batteriemoduls mit einem Kunststoffgehäuse bekannt, wobei dieses Kunststoffgehäuse in bevorzugten Ausführungsformen mit einer zusätzlichen Barriereschicht versehen sein kann, um die Permeation von Wasser durch das Gehäuse zu verhindern.

### AUFGABE UND LÖSUNG

Der vorliegenden Erfindung lag die Aufgabe zugrunde, eine technische Lösung aufzufinden, um die negativen Folgen eines solchen Elektrolytaustritts, insbesondere die genannten Korrosionsschäden, abzumildern oderzu vermeiden.

Diese Aufgabe wird durch ein Kraftfahrzeug-Batteriemodul mit den Merkmalen des Anspruchs 1, durch ein Kraftfahrzeug mit den Merkmalen des Anspruchs 4 sowie durch das Verfahren mit den Merkmalen des Anspruchs 7 gelöst.

Ein erfindungsgemäßes Kraftfahrzeug-Batteriemodul ist ein Batteriemodul für ein elektrisch angetriebenes Kraftfahrzeug und weist daher einen vergleichsweise großen Energiegehalt von mindestens 5 KWh auf. Übliche Gesamtenergiegehalte des Energiespeichers von Elektroautos liegen üblicherweise zwischen 20 KWh und 100 KWh, wobei dies durch ein oder mehrere Batteriemodule gemäß dem Gattungsbegriff des Anspruchs 1 erzielt werden kann. Ein erfindungsgemäßes Batteriemodul weist daher einen Energiegehalt zwischen 5 KWh und 200 kWh auf, vorzugsweise zwischen 20 und 100 KWh.

Ein solches Batteriemodul umfasst mehrere Einzelbatterien, vorzugsweise eine zwei- Zahl von Einzelbatterien, die üblicherweise in Reihe geschaltet sind. Die Einzelbatterien verfügen jeweils über ein Gehäuse, das mindestens eine galvanische Zelle der Einzelbatterie aufnimmt. Dieses Gehäuse bildet den primären Schutz gegen das Entweichen des Elektrolyten. Die Gehäuse sind vorzugsweise prismenförmig und verfügen meist über einen Schalenkörper und ein Deckelkörper, die miteinander verschweißt sind. Dennoch besteht das der Erfindung zugrunde liegende Problem, dass die Verschwei-βung oder auch Dichtungen im Bereich von Poldurchführungen des Gehäuses nach einigen Jahren verschlissen sein können, so dass dann Elektrolyt austreten kann. Die Gehäuse können, wie eingangs erwähnt, geschweißten oder gegossenen Metallbehälter, beispielsweise aus Aluminium oder Stahl, sein. Auch Kunststoffgehäuse sind möglich.

Die genannten Einzelbatterien sind in einem Batteriemodul zusammengeführt, wobei des über eine Verbindungseinrichtung erzielt ist. Diese Verbindungseinrichtung stellt eine mechanisch die Einzelbatterien bündelnde Einrichtung dar, so dass die Einzelbatterien anschließend im Zuge der Montage gemeinsam bewegt und in ein Fahrzeug eingesetzt werden können.

Das so durch die Einzelbatterien und die Verbindungseinrichtung gebildete Batteriemodul ist erfindungsgemäß zumindest abschnittweise von einer als Korrosionsschutz agierenden Schutzschicht bedeckt, die entweder das gesamte Batteriemodul oder besonders gefährdete Teilbereich überdeckt.

Diese Schutzschicht dient nicht primär dem Schutz des Batteriemoduls, sondern dem Schutz der Karosserie. Durch die Schutzschicht wird erreicht, dass in flüssiger Form oder in Gasform aus einer beschädigten Einzelbatterie austretender Elektrolyt oder Bestandteile hiervor nicht mit Karosserieteilen in Kontakt gelangen können. Zusätzlich bewirkt die Schutzschicht jedoch auch, dass austretender Elektrolyt nur in geringerem Maße in den Bereich der beschädigten Einzelbatterie benachbarter Einzelbatterien gelangen kann und dort Beschädigungen verursachen kann.

Die Verbindungseinrichtung kann ein die Einzelbatterien vollständig umgebendes Außengehäuse umfassen. In diesem Fall ist die Schutzschicht auf der Außenseite des Außengehäuses aufgebracht und bedeckt diese Außenseite zumindest zum überwiegenden Teil.

Das Außengehäuse bildet bei einer solchen Gestaltung einen zusätzlichen Schutz für den Fall einer defekten Einzelbatterie. Erst wenn sowohl im Gehäuse der Einzelbatterie als auch am umgebenden Gehäuse des Moduls Beschädigungen gegeben sind, kommt es zum Austritt von Elektrolyt oder einer Komponente hiervon. Die auf die Außenseite des Außengehäuses aufgebrachte Schutzschicht verhindert dann, dass dieses austretende Medium Karosserieteile erreicht.

Zusätzlich kann eine zusätzliche Schutzschicht jedoch auch in diesem Falle unmittelbar auf den im Außengehäuse eingelegten Einzelbatterien aufgebracht sein, so dass zusätzlicher Schutz erzielt wird.

Alternativ zu einem die Einzelbatterien vollständig isolierend umfassenden Außengehäuse kann die Verbindungseinrichtung alternativ die Einzelbatterien nur teilweise umgeben, so dass Außenflächen der Gehäuse der Einzelbatterien gleichzeitig die Außenfläche des Batteriemoduls bilden. In diesem Fall ist die Schutzschicht ist als gemeinsame Schutzschicht ausgebildet, die zumindest abschnittsweise die Außenflächen der Gehäuse einer Mehrzahl von Einzelbatterien bedeckt.

Eine solche Verbindungseinrichtung kann gleichsam einem Käfig oder einer Wanne ausgebildet sein, der die Einzelbatterien zu einer Einheit zusammenfügt. Die Gehäuse der Einzelbatterien bilden abschnittsweise die Außenseite des Batteriemoduls und werden dementsprechend zumindest abschnittsweise mit der erfindungsgemäß vorgesehenen Schutzschicht durch Aufsprühen bedeckt. Insbesondere kann jene Gehäuseseite der Einzelbatterien, an der die Pole vorgesehen sind, durch die Verbindungseinrichtung zugänglich bleiben, so dass die Verbindung der Einzelbatterien nach Zusammenfügung der Einzelbatterien zu einem Batteriemodul geschaffen werden kann.

Die Verbindungseinrichtungen können als Käfige, Gehäuse oder Halbschalen aus Kunststoff oder Metall, insbesondere Stahl oder Aluminium, ausgebildet sein.

Ein erfindungsgemäßes Kraftfahrzeug ist mit einem elektrischen Antriebsmotor und mindestens einem Kraftfahrzeug-Batteriemodul zur Versorgung des Antriebsmotors ausgestattet. Das Kraftfahrzeug verfügt weiterhin über mindestens ein Batteriemodul mit einer Mehrzahl von Einzelbatterien, die miteinander zu einem Batteriemodul mit einem Energiegehalt von mindestens 5 KWh zusammengefasst sind. Dabei ist das Batteriemodul nach oben beschriebener Art ausgebildet.

Das Kraftfahrzeug weist eine Karosserie auf, umfassend eine Tragstruktur zur Aufnahme mindestens eines beschriebenen Batteriemoduls auf, insbesondere einer wannenartige Tragstruktur.

Vorzugsweise ist diese Karosserie im Bereich der Tragstruktur ebenfalls mit einer die Oberflächen der Tragstruktur überziehenden Schutzschicht ausgebildet. Somit ist nicht nur durch die Schutzschicht auf dem Batteriemodul die Gefahr verringert, dass korrosive Bestandteile des Elektrolyten mit Karosserieteilen in Kontakt kommt, sondern die besonders gefährdeten Karosserieteile sind zusätzlich ebenfalls mit einer aufgesprühten Schutzschicht versehen. Die Tragstruktur kann insbesondere Hohlprofile umfassen. Damit durch Befestigungsbohrungen und dergleichen in diesen Hohlprofilen nicht die Gefahr des Eindringens von ausgetretenem Elektrolyt oder seiner Bestandteile besteht, sind diese Hohlprofile vorzugsweise auch von innen mit einer eingesprühten Schutzschicht versehen.

In einer Tragstruktur des Fahrzeugs sind vorzugsweise mehrere einzeln mit einer Schutzschicht versehene Batteriemodule aufgenommen. Insbesondere vorzugsweise sind diese gemeinsam mit einer weiteren aufgesprühten Schutzschicht versehen, vorzugsweise nachdem die elektrische Verbindung zwischen den Batteriemodulen geschaffen wurde, so dass auch die diesbezügliche Verkabelung von dieser weiteren Schutzschicht ummantelt ist.

Weiterhin wird die Gesamtheit der in der Tragstruktur aufgenommenen Batteriemodule vorzugsweise mit einem Deckel abgedeckt. Als vorteilhaft wird es angesehen, wenn auch dieser nochmals mit einer Schutzschicht überdeckt ist.

Im Idealfalle wird also angestrebt, dass in einer mit einer aufgesprühten Schutzschicht versehenen Tragstruktur einzeln mit einer aufgesprühten Schutzschicht versehene Batteriemodule aufgenommen wird, die nochmals mit einer gemeinsamen aufgesprühten Schutzschicht versehen sind, bevor sie von einem Deckel überdeckt werden, dessen Außenseite auch mit einer aufgesprühten Schutzschicht überzogen wird.

Das korrespondierende erfindungsgemäße Verfahren zur Herstellung eines Kraftfahrzeug-Batteriemoduls sieht vor, dass mehrere Einzelbatterien, jeweils umfassend mindestens eine galvanische Zelle und ein Gehäuse, in der die mindestens eine Zelle enthalten ist, miteinander zu einem als Ganzes handhabbaren Batteriemodul verbunden werden.

Auf der Außenseite des Batteriemoduls wird dann mittels eines Sprühvorgangs eine Schutzschicht aus einem sprühfähigen und zur Verfestigung geeigneten Sprühmaterial aufgebracht, welches nach Verfestigung die das Batteriemodul zumindest abschnittsweise umgebende Schutzschicht bildet.

Das Ausbringen des Sprühmaterials, welches auf der Außenseite des Batteriemoduls anschließend die beschriebene Schutzschicht bildet, erfolgt vorzugsweise entweder manuell mittels einer Sprühpistole oder durch ein robotergeführtes Sprühwerkzeug. Der Vorgang des Aufbringens des Sprühmaterials kann an verschiedenen Stellen in der Fertigungskette des Fahrzeugs vorgesehen sein. So ist es einerseits möglich, die Batteriemodule zeitlich und ggf. örtlich getrennt vom Einsetzen in die Fahrzeugkarosserie mit der Schutzschicht zu versehen und anschließend in einer angemessenen Transportverpackung an den Fahrzeughersteller zu liefern. Alternativ kann der Sprühvorgang jedoch auch beim Fahrzeughersteller erfolgen, wodurch die Möglichkeit besteht, die Aufbringung der Schutzschicht sowohl auf dem Batteriemodul selbst als auch auf Karosserieteilen gemeinsam, also mit der gleichen Sprühvorrichtung und/oder an der gleichen Sprühstation im Rahmen der Fahrzeugherstellung durchzuführen.

Im Falle, dass die Verbindung der Einzelbatterien zu einem Batteriemodul mittels eines gemeinsamen Außengehäuses erfolgt, welches mehrere Einzelbatterien gemeinsam vollständig umgibt, wird beim Sprühvorgang vorzugsweise wird die Außenseite dieses Außengehäuses mit der Schutzschicht versehen. Die Schutzschicht wird entweder auf der gesamten Außenseite oder annähernd (>90°) der gesamten Außenseite aufgebracht, oder aber sie wird nur selektiv in besonders gefährdeten Bereichen, beispielsweise im Bereich derTrennlinie zwischen zwei Gehäuseschalen aufgebracht.

Im Falle, dass die Verbindung der Einzelbatterien zu einem Batteriemodul mittels einer offenen Verbindungseinrichtung erfolgt, welche mehrere Einzelbatterien gemeinsam umfasst, wobei abschnittsweise die Gehäuse der Einzelbatterien die Außenseite des Batteriemoduls bilden, wird beim Sprühvorgang vorzugsweise die freiliegende Außenseite der Gehäuse der Einzelbatterien mit einer gemeinsamen Schutzschicht versehen. Hierbei wird im Rahmen eines durchgehenden Sprühvorgangs eine gemeinsame Schutzschicht auf mehreren der Einzelbatterien aufgebracht, insbesondere im Bereich der Gehäuseseite, an der die Pole der Einzelbatterien vorgesehen sind.

Es wird als vorteilhaft angesehen, wenn die Einzelbatterien bereits vor Aufbringung der Schutzschicht miteinander verschaltet werden. Bei einer Gestaltung mit einem umschließenden Außengehäuse ist dies meist zwingend erforderlich, da nach Aufbringen der Schutzschicht ein Öffnen des Außengehäuses üblicherweise nicht mehr möglich ist, ohne die Schutzschicht zu verletzen. Bei einer Ausgestaltung mit einer Verbindungseinrichtung, die die Gehäuse der Einzelbatterien frei lässt, werden die zum Zwecke der Verschaltung angebrachten Verbindungsleitungen zwischen den Einzelbatterien von der Schutzschicht mit benetzt. Es entfällt der Bedarf, die Pole nach dem Sprühvorgang von der isolierenden Schutzschicht zu befreien.

Von Vorteil kann es weiterhin sein, wenn zum Schutz von mindestens einem Kontaktabschnitt zum Anschluss des Batteriemoduls vor Aufbringung der Schutzschicht dieser Kontaktabschnitt mit einer temporären Abdeckung versehen wird. Solche temporäre Abdeckungen können beispielsweise in Form kleine Kunststoffkappen vorgesehen sein, die auf die Polkontakte vor dem Sprühen aufgeschoben werden.

Zur Ausgestaltung eines Kraftfahrzeugs in Hinblick auf die Korrosionsfestigkeit im Bereich eines Batteriemoduls und einer Tragstruktur zur Aufnahme des Batteriemoduls kann das Batteriemodul vor oder nach dem Einsetzen in die Tragstruktur mittels des oben beschriebenen Verfahrens mit einer Korrosionsschutzschicht versehen werden.

Es ist von Vorteil, wenn vor dem Einsetzen des Batteriemoduls in die Tragstruktur auch Oberflächen der Tragstruktur mit einer Schutzschicht versehen werden, wobei diese Schutzschicht an der Tragstruktur vorzugsweise aus dem gleiche Sprühmaterial wie die Schutzschicht des Batteriemoduls besteht und insbesondere vorzugsweise im Rahmen eines gemeinsamen Sprühvorgangs mittels der gleichen Sprühvorrichtung aufgebracht wird.

Insbesondere bei einem Verfahren, bei dem das Aufsprühen der Schutzschicht unmittelbar vor dem Einsetzen des Batteriemoduls in die Fahrzeugkarosserie erfolgt, bietet es sich an, nicht nur das Batteriemodul selbst, sondern auch die gefährdeten Bereiche der Karosserie in unmittelbarer Umgebung des Batteriemoduls mit der Schutzschicht zu versehen. Hierdurch wird eine weitere Schutzmaßnahme gegen Korrosion erreicht.

Die Schutzschicht, die bei dem vorbeschriebenen Batteriemodul und ggf. der karosserieseitigen Tragstruktur Verwendung findet, dient dem Korrosionsschutz der Karosserie, da verhindert wird, dass in flüssiger oder gasförmiger Form austretende Elektrolyt-Flüssigkeit oder deren Bestandteile karosserieteile erreichen und Beschädigen können. Nachfolgend wird erläutert, welche Anforderungen an das Sprühmaterial vorzugsweise zu stellen sind.

Es ist bevorzugt, dass das Sprühmaterial dafür ausgebildet ist, eine elektrisch isolierende Schutzschicht zu bilden. Hierzu umfasst es in aller Regel ausschließlich Komponenten, die elektrisch nicht leitend sind oder in einen elektrisch nicht leitenden Zustand überführt werden können. Das Sprühmaterial und die hiervon gebildete Schutzschicht müssen allerdings nicht die gleichen Eigenschaften haben, da im Zuge des Versprühens oder des anschließenden Aushärtens flüchtige Teilbestandteile bspw. ausgasen können. Vor Relevanz ist lediglich, dass die gebildete Schutzschicht die genannte elektrisch isolierende Wirkung aufweist. Dies ist bei ölartigen oder wachsartigen Konservierungsmitteln üblicherweise gegeben. Entsprechend umfasst das Sprühmaterial und damit auch die Schutzschicht ein Wachs.

Komponenten geeigneter Sprühmaterialien sind in der Regel eine schichtbildende Komponente und gegebenenfalls eine Trägerkomponente, bei der er sich in der Regel um ein Lösungs- oder Dispergiermittel handelt, in der die schichtbildende Komponenten gelöst oder dispergiert vorliegt. Bei Abwesenheit der Trägerkomponente liegt die schichtbildende Komponente in der Regel selbst in flüssiger Form vor, damit ihre Sprühbarkeit gewährleistet ist.

Geeignete schichtbildende Komponenten sind beispielsweise kommerziell erhältliche Wachse, wie sie im Bereich der Hohlraumkonservierung von Kraftfahrzeugen Verwendung finden, soweit sie nicht elektrische leitende Zusätze enthalten, die einem aus Ihnen gebildeten Sprühmaterial und/oder einer aus ihnen gebildeten Schutzschicht elektrisch leitende Eigenschaften verleihen.

Besonders handelt es sich bei dem Wachs um ein Wachs auf Mineralölbasis, insbesondere um ein Paraffinwachs.

Das Wachs, insbesondere das Wachs auf Mineralölbasis, besonders bevorzugt das Paraffinwachs, weist erfindungsgemäß einen Erstarrungspunkt im Bereich von 30 bis 95 °C auf. Besonders bevorzugt weist das Wachs, insbesondere das Wachs auf Mineralölbasis, besonders bevorzugt das Paraffinwachs, einen Erstarrungspunkt im Bereich von 35 °C bis 85 °C auf.

Das Sprühmaterial weist neben dem Wachs als weitere schichtbildende Komponente zusätzlich ein Bindemittel auf. Das Bindemittel weist nach Verfestigung eine Temperaturstabilität von mindestens 100 °C, besonders bevorzugt von 120 °C, auf. Das Bindemittel bildet nach einer Verfestigung eine Matrix, in die das Wachs eingelagert ist. Auch bei Temperaturen oberhalb der genannten 100 °C, insbesondere der genannten 120 °C, bleibt die Matrix erhalten.

Während ein Wachs durch bloßes Abkühlen verfestigbar ist, erfolgt die Verfestigung bei einem Bindemittel bekanntlich durch physikalisches Trocknen (also dem Entfernen eines Lösemittels) und/oder durch eine chemische Reaktion.

Die Kombination aus dem Wachs und dem Bindemittel ermöglicht die Bereitstellung besonders dünner Schutzschichten mit Dicken von nur wenigen µm. Die alleinige Verwendung eines Bindemittels kann zwar ebenfalls zu wirksamen Schutzschichten führen, für einen wirksamen Korrosionsschutz müssen die Schichten nur aus Bindemitteln aber in der Regel deutlich mehr als 100 µm dick oder aber mehrlagig ausgebildet sein. In Kombination mit dem Wachs sind wesentlich geringere Dicken ausreichend.

Als Bindemittel kann das Sprühmaterial beispielsweise Alkydharze, Acrylharze, Polyester, Urethane, native und synthetische Öle mit OH-Funktionalität, oxidierte Wachse und Petrolate und Kohlenwasserstoffharze mit OH-Funktionalität umfassen. Diese Bindemittel weisen in der Regel zumindest eine funktionelle Gruppe auf, die ausgewählt ist aus der Gruppe bestehend aus den Amino-Gruppen, den Carboxy-Gruppen und den Hydroxy-Gruppen.

In bevorzugten Ausführungsformen umfasst die schichtbildende Komponente eine Kombination aus mindestens einem der Bindemittel und mindestens einem Härter. Dem Fachmann sind Kombinationen aus Bindemitteln und dafür geeigneten Härtern bekannt. Kombinieren lassen sich die genannten Bindemittel beispielsweise mit Härtern auf Basis von Aminen, Peroxiden, Diisocyanaten und Mischungen davon. Als konkrete Beispiele solcher Härter lassen sich Diphenylmethandiisocyanat, Hexamethylendiisocyanat, Toluoldiisocyanat, Isophorondiisocyanat und Derivate dieser Verbindungen nennen.

Bevorzugt ist das Bindemittel frei von Lösemitteln, die bei der Verfestigung und/oder zur Verfestigung der schichtbildenden Komponente entfernt werden müssen.

Besonders bevorzugt umfasst das Sprühmaterial neben dem Wachs als Bindemittel ein oxidativ und/oder mittels Strahlung vernetzbares Bindemittel, das die das Wachs einzulagernde Matrix bilden zu vermag, insbesondere auf Polyesterbasis. Geeignet sind hierfür sind beispielsweise Polyesterharze mit radikalisch vernetzbaren Seitenketten.

In weiteren besonders bevorzugten Ausführungsformen umfasst das Sprühmaterial neben dem Wachs ein Urethanharz, ein Alkydharz oder ein Acrylharz.

In bevorzugten Ausführungsformen lassen sich der schichtbildenden Komponente ein oder mehrere Additive zusetzen, die die Verarbeitungseigenschaften des Sprühmaterials oder die Eigenschaften der Schutzschicht beeinflussen. Solche Additive können beispielsweise Korrosionsschutzadditive wie Calciumsulfonat, Füllstoffe wie Talkum, rheologische Additive, Katalysatoren, die eine Härtung eines Bindemittels beeinflussen und Weichmacher, die die Dehnbarkeit und Elastizität der Schutzschicht beeinflussen, sein. Als Weichmacher kommen beispielsweise Phtalate wie Diethylhexyphtalat in Frage. Polyurethanbasierte Polymere weisen beispielsweise eine besonders gute isolierende Wirkung auf.

In Übereinstimmung mit obigen Ausführungen umfasst das Sprühmaterial in bevorzugten Ausführungsformen keine Komponenten, die elektrisch leitfähig sind oder dazu führen, dass die entstehende Schutzschicht elektrisch leitfähig ist.

Als Trägerkomponente kann das Sprühmaterial grundsätzlich auch ein Lösemittel enthalten, das bei der Verfestigung und/oder zur Verfestigung der schichtbildenden Komponente entfernt wird, beispielsweise ein organisches Lösemittel oder Wasser. Besonders bevorzugt ist es allerdings frei von solchen Lösemitteln.

Besonders bevorzugt umfasst das Sprühmaterial als Trägerkomponente ein Mineralöl, insbesondere ein Mineralöl aus gesättigten kettenförmigen und/oder gesättigten ringförmigen und/oder aromatischen Kohlenwasserstoffen. Mineralöle weisen in der Regel keinen scharfen Siedepunkt auf sondern einen Siedereich, der sehr weitgefasst sein kann. Dieselkraftstoff weist beispielsweise einen mehrere 100 °C breiten Siedebereich auf. Besonders bevorzugt wird das Mineralöl bei der Verfestigung und/oder zur Verfestigung der schichtbildenden Komponente nicht wie die oben genannten Lösemittel entfernt sondern stattdessen wie das Wachs in die vom Bindemittel gebildete Matrix eingelagert. Hierzu umfasst es bevorzugt keine Komponenten, die unterhalb 40 °C, bevorzugt unterhalb 60 °C, besonders bevorzug unterhalb 80 °C, sieden. Besonders bevorzugt liegt der Siedebereich des Mineralöls im Bereich von 80 °C bis 120 °C.

Vorliegend dient die Trägerkomponente primär zum Lösen des Wachses sowie zur Einstellung der Viskosität des Sprühmaterials. Die Scherviskosität des Sprühmaterials bei 23 °C (bestimmbar nach DIN 53019-1 / DIN EN ISO 3215) wird bevorzugt auf einen Wert im Bereich von 80 bis 240 mPas, bevorzugt im Bereich von 150 bis 190 mPas, eingestellt. Dies ist insbesondere dann bevorzugt, wenn die Trägerkomponente neben dem Wachs das beschriebene Bindemittel als weitere schichtbildende Komponente aufweist. Damit der Flammpunkt des Sprühmaterials niedrig bleibt, werden hierfür bevorzugt keine Mineralöle mit zu tief siedenden Komponenten verwendet. Der Flammpunkt (bestimmbar nach DIN EN ISO 2719) liegt bevorzugt oberhalb 120 °C.

Besonders bevorzugt umfasst das Sprühmaterial die folgenden Komponenten in den folgenden Anteilen:
- 5 Gew-% bis 15 Gew-% des Wachses als schichtbildende Komponente,
- 10 Gew-% bis 40 Gew-%, bevorzugt 15 Gew-% bis 35 Gew-%, des Bindemittels als weiterer schichtbildender Komponente,
- 30 Gew.-% bis 60 Gew.-% Additive, und
- 5 Gew-% bis 15 Gew-% des Mineralöls als Trägerkomponente, bevorzugt 5 Gew-% bis 10 Gew-% des Mineralöls als Trägerkomponente.

Die genannten Anteile ergänzen sich im Sprühmaterial auf 100 Gew.-%.

Bevorzugt ist das Sprühmaterial dafür ausgebildet, eine verfestigte Schutzschicht zu bilden, deren Streckdehnung bis zum Einreißen mindestens 4 % beträgt. Dies trägt der Tatsache Rechnung, dass im Kontext von Kraftfahrzeugen Erschütterungen und Vibrationen im Betrieb zu erwarten sind, die eine zu starre Schicht mit geringerer Streckdehnung eher zum Einreißen bringen und somit die Gefahr des zumindest partiellen Verlustes der Schutzwirkung verursachen.

Bevorzugt wird das Sprühmaterial in einer Menge aufgebracht, die in bedeckten Bereichen der Au-ßenseite des Batteriemoduls zu einer Schichtdicke der Schutzschicht zwischen 5 µm und 0,5 mm führt. Wenngleich je nach Material auch größere Schichtdicken möglich sind, wurde doch festgestellt, dass diese geringen Schichtdicken in der Regel ausreichen. Zudem neigen Schichten größerer Dicke verstärkt zum Einreißen. Besonders bevorzugt liegt die Schichtdicke zwischen 5 µm und 50 µm, besonders bevorzugt zwischen 15 µm und 20 µm. Sie liegt damit deutlich unter üblichen Schichtdicken von Lackbeschichtungen. Innerhalb dieser bevorzugten Bereiche kann die tatsächliche Schichtdicke in Abhängigkeit der Rauhigkeit der zu beschichtenden Oberfläche gewählt werden. Bei geringer Rauhigkeit wird bevorzugt eine Dicke am unteren Ende der angegebenen Bereiche gewählt.

In besonders bevorzugten Ausführungsformen können der schichtbildenden Komponente und damit dem Sprühmaterial auch Reservoirs mit branderstickenden oder brandhemmenden Inhaltsstoffen, insbesondere CO₂, die in die Schutzschicht eingebettet werden, zugesetzt werden.

Kommt es Brandfalle so werden diese Reservoirs, die beispielsweise in Form kleiner Kapseln vorliegen, durch die Hitze geöffnet und geben das brandhemmende Mittel ab. Hierbei kann es sich beispielsweise um CO₂ in gebundener Form handeln. Eine solche Pigmentierung kann bereits bei der Herstellung des Wachses eingebracht werden.

Es hat sich gezeigt, dass neben spezifischen Sprühmaterialien, die für diesen Anwendungszweck hergestellt werden, auch typische ölige oder wachsartigen Konservierungsstoffe zur Hohlraumkonservierung verwendbar sein. Solche sind beispielsweise von den Firmen Fuchs Schmierstoffe GmbH und Pfinder KG erhältlich. Solche Konservierungswachse zu verwenden, kann vorteilhaft sein, da sie im Zuge des Fahrzeugbaus ohnehin Verwendung finden und es eine Vereinfachung der Fertigungsabläufe bedeuten kann, wenn die Aufbringung solcher Wachse auf Karosserieteile und auf die Batteriemodulen im Rahmen der Fertigung zusammengefasst wird.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen eine Einzelbatterie im vollständigen und im geschnittenen Zustand, wobei solche Einzelbatterien bestimmungsgemäß zu Batteriemodulen zusammengefasst werden.
Fig. 2 zeigt eine Mehrzahl von Einzelbatterien sowie eine käfigartige Verbindungseinrichtung zur Zusammenfassung der Einzelbatterien zu einem Batteriemodul
Fig. 3 zeigt das Batteriemodul, das durch Zusammenführen der Einzelbatterien in die Verbindungseinrichtung gemäß Fig. 2 entsteht.
Fig. 4 zeigt das Batteriemodul der Fig. 3 nach Aufbringen einer Schutzschicht.
Fig. 5 zeigt eine Mehrzahl von Einzelbatterien sowie eine gehäuseartige Verbindungseinrichtung zur Zusammenfassung der Einzelbatterien zu einem Batteriemodul
Fig. 6 zeigt das Batteriemodul, das durch Zusammenführen der Einzelbatterien in die Verbindungseinrichtung gemäß Fig. 5 entsteht.
Fig. 7 zeigt das Batteriemodul der Fig. 6 nach Aufbringen einer Schutzschicht.
Fig. 8 bis 10 zeigen die Bündelung von Batteriemodulen zu einer Gesamtbatterie.
Fig. 11 zeigt eine Fahrzeugkarosserie und den zur Aufnahme von Batteriemodulen vorgesehenen Aufnahmebereich dieser Karosserie.
Fig. 12 zeigt die Fahrzeugkarosserie mit eingesetzten Batteriemodulen.

### DETAILLIERTE BESCHREIBUNG DER AUSFÜHRUNGSBEISPIELE

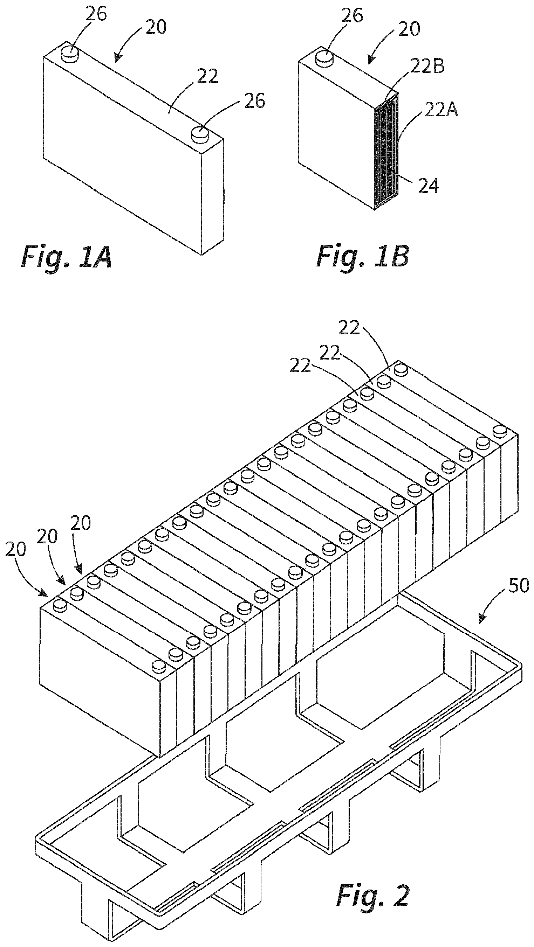

Die Figur 1A zeigt eine Einzelbatterie 20, wie sie bei einem erfindungsgemäßen Batteriemodul Verwendung findet. Diese Einzelbatterie 20 verfügt über ein Gehäuse 22, welches an zwei Stellen Bohrdurchführungen und Kontaktabschnitte 26 aufweist. In Figur 1B ist die Einzelbatterie 20 geschnitten dargestellt. Es ist zu ersehen, dass innerhalb des Gehäuses 22 eine galvanische Zelle 24 mit alternierenden positiven und negativen Elektroden, getrennt durch Separatoren, angeordnet ist. Weiterhin ist zu erkennen, dass das Gehäuse 22 einen Schalenkörper 22A sowie einen Deckel 22B aufweist. Je nach konkreter Ausgestaltung der Einzelbatterie sind diese auf verschiedene Weisen miteinander verbunden, beispielsweise verschweißt, damit der im Gehäuse 22 ebenfalls vorhandene Elektrolyt nicht auslaufen oder gasförmige entweichen kann. Neben diesen Kontaktlinien zwischen dem Schalenkörper 22A und dem Deckel 22B sind auch die nicht näher dargestellten Poldurchführungen im Bereich der Kontaktabschnitte 26 grundsätzlich gefährdet, im Zuge des Verschleißes der Einzelbatterie undicht zu werden, so dass hier Elektrolyt austreten könnte.

Die Figuren 2 bis 4 einerseits sowie 5 bis 7 andererseits zeigen verschiedene Varianten von Batteriemodulen, die aus solchen Einzelbatterien aufgebaut sind.

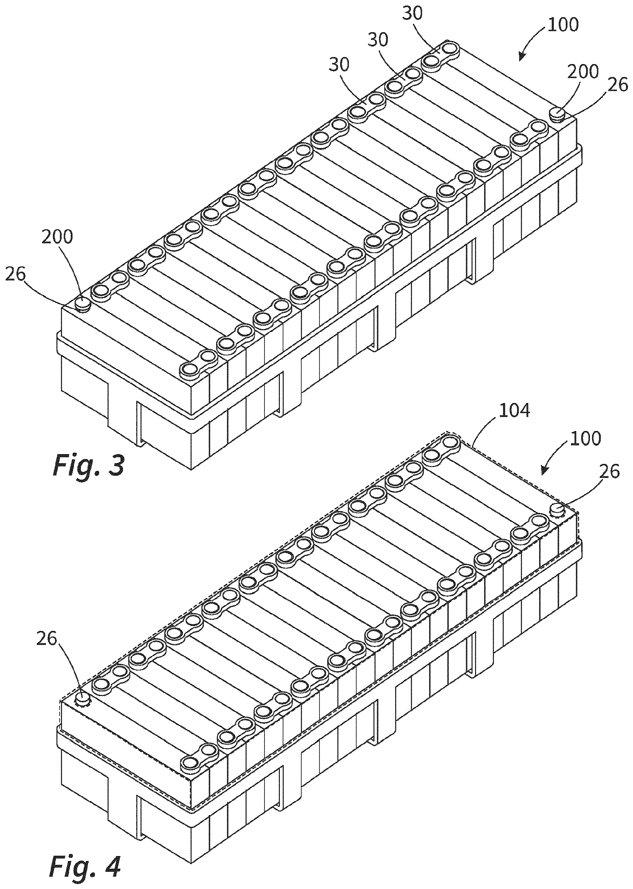

Im Falle der Ausgestaltung der Figuren 2 bis 4 ist eine Art Käfig als Verbindungseinrichtung 50 vorgesehen, der dem Zweck dient, eine Mehrzahl von Einzelbatterien 20 aufzunehmen, so dass diese im weiteren Montageprozess gemeinsam gehandhabt werden können. Figur 3B zeigt den Montagezustand des im Wesentlichen fertiggestellten Batteriemoduls 100. Die Einzelbatterien 20 sind in die genannte Verbindungseinrichtung 50 eingesetzt und durch Polbrücken 30 miteinander in Serie geschaltet. In diesem Zustand der Figur 3 ist das Batteriemodul 100 grundsätzlich nutzbar. Allerdings ist der einzige Schutz gegen ein Entweichen des Elektrolyten aus den Einzelbatterien 20 das jeweilige Gehäuse 22.

Daher wird eine weitere Schutzschicht 104 vorgesehen, die aufgebracht wird, nachdem zunächst die freigebliebenen Kontaktabschnitte 26 mit temporären Abdeckungen 200 versehen sind. Wie anhand der Figur 4 ersichtlich ist, wird die Schutzschicht im oberen Teil des Batteriemoduls angebracht und überdeckt dort alle Einzelbatterien 20 gemeinsam. Die Aufbringung erfolgt beispielsweise mittels einer Sprühpistole oder durch ein Roboter-Sprühwerkzeug. Die Schichtdicke beträgt vorzugsweise etwa 0,3 mm. Bei Verwendung eines Sprühmaterials, das eine Kombination aus dem oben beschriebenen Wachs und dem Bindemittel aufweist, liegt die Schichtdicke bevorzugt zwischen 5 µm und 50 µm. Wenn es nun zu dem Versagen eines Gehäuses 22 einer Einzelbatterie 20 kommt, so kann der austretende Elektrolyt zunächst nicht frei entweichen, da er sich unterhalb der Schutzschicht 104 befindet. Obwohl natürlich die Gefahr besteht, dass auch diese aufgrund der korrosiven Wirkung des Elektrolyten versagt, ist dennoch die Gefahr verringert, dass der Elektrolyt mit Karosserieteilen in Verbindung kommen kann und dort korrosiv wirkt. Anhand der Figur 4 ist auch ersichtlich, dass nach Abnehmen der temporären Abdeckungen 200 die Kontaktabschnitte 26 fertig zum Anschluss der Stromkabel sind. Die Abdeckungen 200 haben bewirkt, dass sie beim Sprühvorgang von Hohlmaterial frei bleiben.

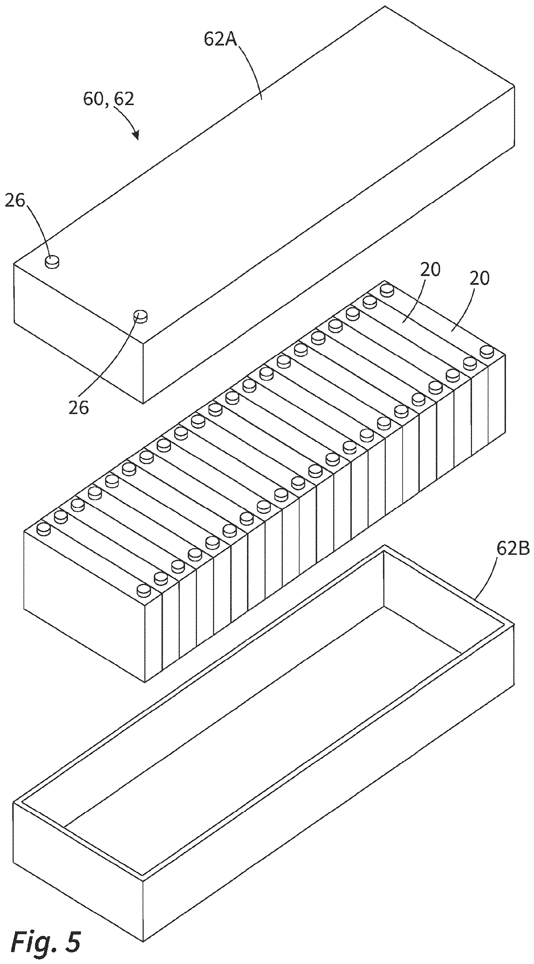

Bei der Ausgestaltung gemäß der Figur 5 ist die Verbindungseinrichtung 60, die die Einzelbatterien 20 zu einem gemeinsam handhabbaren Batteriemodul 100 zusammenführt, in Form eines Außengehäuses 62 vorgesehen, welches eine Gehäuseschale 62B und einen Gehäusedeckel 62A aufweist. Am Gehäusedeckel 62A sind weiterhin Kontaktabschnitte 26 vorgesehen, die in nicht näher dargestellter Weise mit den Kontaktabschnitten 26 der Einzelbatterien 20 verbunden werden.

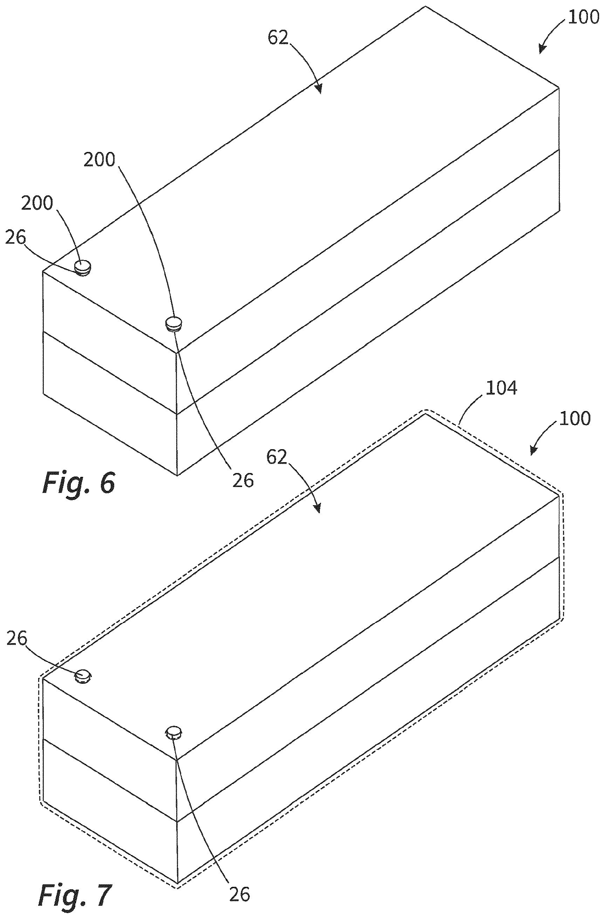

Bei dieser Ausgestaltung werden die Einzelbatterien 20 zunächst in die Gehäuseschale 62B eingelegt und dann diese durch den Gehäusedeckel 62A verschlossen. Es ist erfindungsgemäß möglich, nach dem Einsetzen der Einzelbatterien 20 in die Gehäuseschale 62B und vor Anbringen des Gehäusedeckels 62A bereits in der in den Figuren 2 bis 4 verdeutlichten Weise eine Schutzschicht vorzusehen. Alternativ oder zusätzlich kann diese Schutzschicht jedoch auch erst aufgebracht werden, wenn das Außengehäuse 62 geschlossen ist, wie es Figur 6 zeigt. Dann werden in ähnlicher Weise wie es zuvor bereits beschrieben wurde, die Kontaktabschnitte 26 mit temporären Abdeckungen 200 versehen, um anschließend die wiederum etwa 0,3 bis 0,5 mm dicke Schutzschicht 104 aufzubringen. Im Falle der Ausgestaltung der Figuren 5 bis 7 umgibt diese Schutzschicht das Außengehäuse 62 mit Ausnahme der Kontaktabschnitte 26 vollständig. Es wären jedoch auch Gestaltungen denkbar, bei denen nur das unmittelbare Umfeld der Kontaktabschnitte 26 sowie ein Bereich um den Kontaktbereich 64 der Gehäuseteile mit einer Schutzschicht versehen wird. Wie bereits erwähnt, liegt die Dicke der Schutzschicht bei Verwendung der Kombination aus dem oben beschriebenen Wachs und dem Bindemittel bevorzugt tiefer, nämlich zwischen 5 µm und 50 µm.

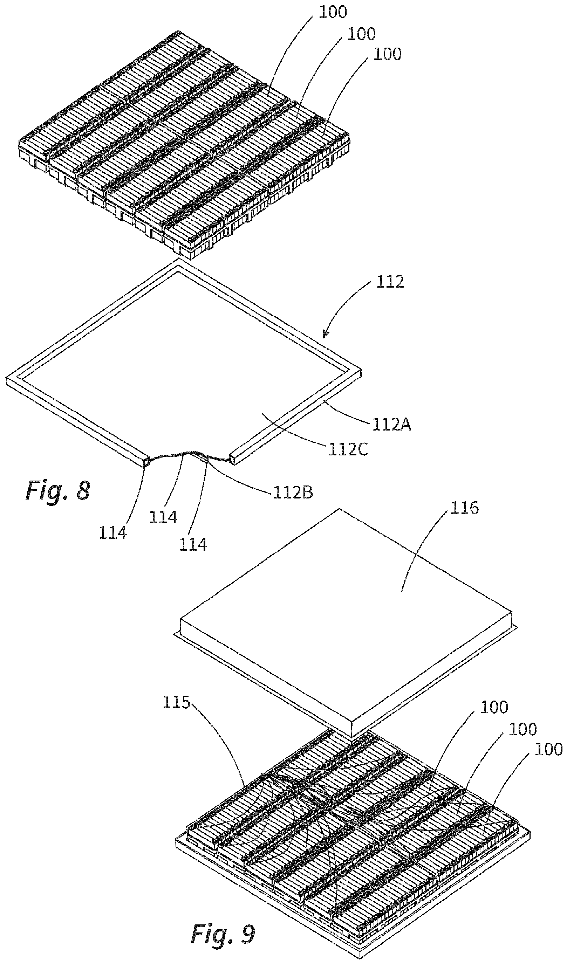

Die Figuren 8 bis 10 zeigen eine Tragstruktur 112 für die Batteriemodule 100. Die Tragstruktur 112 nimmt vorliegend insgesamt zwölf Batteriemodule 100 auf. Sie besteht aus Hohlprofilen 112A, 112B und einem Bodenblech 112C. Die Tragstruktur ist mit einer Schutzschicht 114 überzogen, wobei diese Schutzschicht 114 auch innerhalb der Hohlprofile 112A, 112B vorgesehen ist, um hier Korrosion durch eintretende Elektrolytbestandteile zu verhindern. Die Gefahr eines solchen Eindringens ist insbesondere aufgrund von Befestigungsbohrungen und dergleichen gegeben.

In die derart vorbereitete Tragstruktur 112 werden die Batteriemodule 100 in der in Fig. 9 verdeutlichten Weise eingefügt, dort befestigt und dann dort miteinander verschaltet. Anschließend wird eine weitere, die Batteriemodule 100 und ggf. auch die Verkabelung gemeinsam überdeckende Schutzschicht 115 aus dem gleichen oder einem anderen ölartigen oder wachsartigen Sprühmaterial aufgebracht.

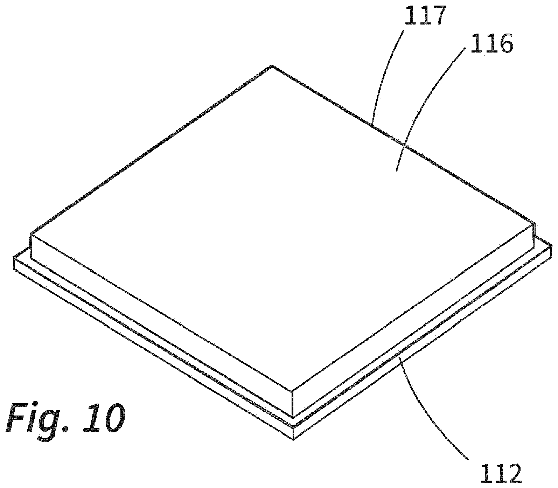

Abschließend wird die Tragstruktur 112 mit den eingelegten Batteriemodulen 100 von einem gemeinsamen Deckel 116 überdeckt, der nochmals mit einer weiteren Schutzschicht 117 überdeckt wird, wie in Fig. 10 verdeutlicht.

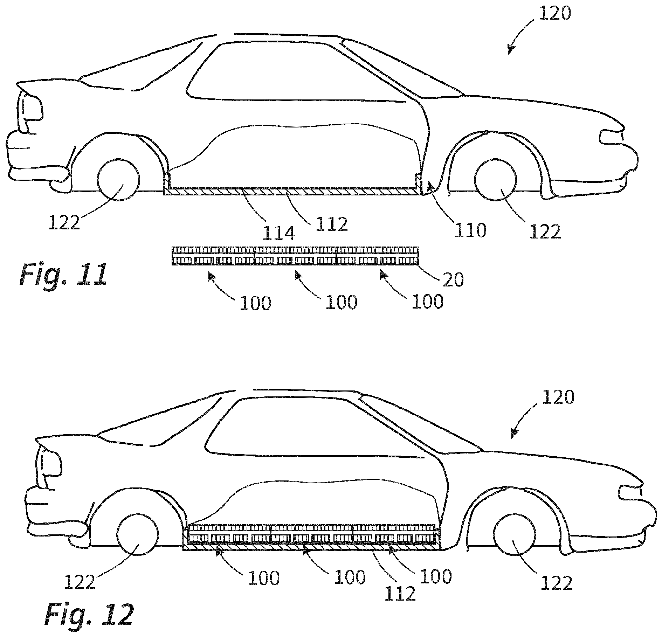

Anhand der Figuren 11 und 12 wird der Einbau in die Karosserie 110 eines Kraftfahrzeugs 120 verdeutlicht. Ein solches Kraftfahrzeug, für das die erfindungsgemäßen Batteriemodule vorgesehen sind, verfügt über mindestens einen Antriebselektromotor 122 zum Antrieb des Kraftfahrzeuges. Das oder die Batteriemodule werden üblicherweise im Fahrzeugboden untergebracht. Hierfür ist eine Aufnahmewanne als Tragstruktur 112 vorgesehen, die entsprechend den Fig. 8 bis 10 ausgebildet sein kann. In diese sind, wie Figur 11 verdeutlicht, die Batteriemodule 100 eingesetzt. Die üblicherweise bestehende Gefahr, dass über die jahrelange Laufzeit eines solchen Kraftfahrzeuges hinweg, Einzelbatterien versagen und zu einer relevanten Schwächung der Fahrzeugkarosserie im Bereich der Aufnahmewanne führen, ist durch die Schutzschicht 104 der Batteriemodule 100 entgegengewirkt. Zusätzlich kann in der in Figur 11 ersichtlichen Weise auch eine Schutzschicht 114 auf den Oberflächen der die Batteriemodule 100 tragenden Karosserieteile selbst vorgesehen sein, vorliegend an der Innenseite der als Aufnahmewanne ausgestalteten Tragstruktur 112.

## Patentansprüche

1. Kraftfahrzeug-Batteriemodul (100) mit einem Energiegehalt von mindestens 5 KWh mit den folgenden Merkmalen:
a. das Batteriemodul (100) umfasst mehrere Einzelbatterien (20), die jeweils mindestens ein Gehäuse (22) und jeweils mindestens eine im Gehäuse angeordnete galvanische Zelle (24) aufweisen, und
b. das Batteriemodul umfasst eine Verbindungseinrichtung (50, 60), mittels derer die Einzelbatterien (20) zu einem als Ganzes handhabbaren Batteriemodul (100) zusammengefasstsind,
**gekennzeichnet durch** das Merkmal:
c. das Batteriemodul (100) weist an seiner Außenseite eine aufgesprühte das Batteriemodul (100) zumindest abschnittsweise umgebende, ein Wachs umfassende Schutzschicht (104) auf, wobei
d. das Wachs in eine Matrix aus einem verfestigten Bindemittel eingelagert ist, wobei das Wachs einen Erstarrungspunkt im Bereich von 30 bis 95 °C und das Bindemittel nach Verfestigung eine Temperaturstabitität von mindestens 100°C aufweist.

2. Kraftfahrzeug-Batteriemodul (100) nach Anspruch 1 mit den folgenden zusätzlichen Merkmalen:
a. die Verbindungseinrichtung (60) umfasst ein die Einzelbatterien (20) vollständig umgebendes Außengehäuse (62), und
b. die Schutzschicht (104) ist auf der Außenseite des Außengehäuses (62) aufgebracht und bedeckt diese Außenseite zumindest zum überwiegenden Teil.

3. Kraftfahrzeug-Batteriemodul (100) nach Anspruch 1 mit den folgenden zusätzlichen Merkmalen:
a. die Verbindungseinrichtung (50) umgibt die Einzelbatterien nur teilweise, so dass Außenflächen der Gehäuse (22) der Einzelbatterien (20) gleichzeitig die Außenfläche des Batteriemoduls (100) bilden, und
b. die Schutzschicht (104) ist als gemeinsame Schutzschicht ausgebildet, die zumindest die Außenflächen der Gehäuse (22) einer Mehrzahl von Einzelbatterien (20) bedeckt.

4. Kraftfahrzeug (120) mit einem Antriebselektromotor (122) und mindestens einem Kraftfahrzeug-Batteriemodul (100) zur Versorgung des Antriebselektromotor (122) mit dem folgenden Merkmal:
a. das Kraftfahrzeug verfügt über mindestens ein Batteriemodul (100) mit einer Mehrzahl von Einzelbatterien (20), die miteinander zu einem Batteriemodul (100) mit einem Energiegehalt von mindestens 5 KWh zusammengefasst sind,
**gekennzeichnet durch** das folgende Merkmal:
b. das Batteriemodul (100) ist nach einem der Ansprüche 1 bis 3 ausgebildet.

5. Kraftfahrzeug (120) nach Anspruch 4 mit dem folgenden Merkmal:
a. das Kraftfahrzeug weist eine Karosserie (110) auf, umfassend eine Tragstruktur (112) zur Aufnahme eines oder mehrerer Batteriemodule (100) und
b. die Karosserie (110) ist im Bereich der Tragstruktur (112) mit einer Schutzschicht (114) versehen, die Oberflächen der Tragstruktur (112) überzieht, wobei die Schutzschicht ein Wachs umfasst und wobei das Wachs in eine Matrix aus einem verfestigten Bindemittel eingelagert ist, wobei das Wachs einen Erstarrungspunkt im Bereich von 30 bis 95 °C und das Bindemittel nach Verfestigung eine Temperaturstabilität von mindestens 100°C aufweist.

6. Kraftfahrzeug (120) nach Anspruch 4 oder 5 mit den folgenden Merkmalen:
a. in einer Tragstruktur (112) ist eine Mehrzahl von Batteriemodulen (100) enthalten, und
b. diese Mehrzahl von Batteriemodulen (100) ist gemeinsam mittels einer weiteren aufgesprühten Schutzschicht (115) überdeckt und/oder die Mehrzahl von Batteriemodulen (100) ist durch einen gemeinsamen Deckel (116) überdeckt, an dessen Außenseite eine weitere aufgesprühte Schutzschicht (117) vorgesehen ist.

7. Verfahren zur Herstellung eines Kraftfahrzeug-Batteriemoduls (100) mit einem Energiegehalt von mindestens 5 KWh mit den folgenden Merkmalen:
a. mehrere Einzelbatterien (20), jeweils umfassend mindestens eine galvanische Zelle (24) und ein Gehäuse (22), in der die mindestens eine Zelle (24) enthalten ist, werden mittels einer Verbindungseinrichtung (50, 60) miteinander zu einem als Ganzes handhabbaren Batteriemodul (100) verbunden, und
b. auf der Außenseite des Batteriemoduls (100) wird mittels eines Sprühvorgangs eine Schutzschicht (104) aus einem sprühfähigen, ein Wachs umfassenden und zur Verfestigung geeigneten Sprühmaterial aufgebracht, welches nach Verfestigung die das Batteriemodul zumindest abschnittsweise umgebende Schutzschicht (104) bildet, wobei
c. das Sprühmaterial neben dem Wachs als weitere schichtbildende Komponente ein Bindemittel aufweist, das nach Verfestigung eine Matrix bildet, in die das Wachs eingelagert ist, wobei das Wachs einen Erstarrungspunkt im Bereich von 30 bis 95 °C und das Bindemittel nach Verfestigung eine Temperaturstabilität von mindestens 100 °C aufweist.

8. Verfahren nach Anspruch 7 mit dem folgenden zusätzlichen Merkmal:
a. das Sprühmaterial weist als Wachs ein Paraffinwachs mit einem Erstarrungspunkt im Bereich von 30 bis 95 °C auf.

9. Verfahren nach einem der Ansprüche 7 oder 8 mit dem folgenden zusätzlichen Merkmal:
a. Das Bindemittel ist ein oxidativ und/oder mittels Strahlung vernetzbares Bindemittel.

10. Verfahren nach einem derAnsprüche 7 bis 9 mit dem folgenden zusätzlichen Merkmal:
a. Das Sprühmaterial umfasst als Trägerkomponente ein Mineralöl.

11. Verfahren nach einem der Ansprüche 7 bis 10 mit dem folgenden zusätzlichen Merkmal:
a. Das Sprühmaterial ist frei von Lösemitteln, die bei der Verfestigung der schichtbildenden Komponenten entfernt werden müssen.

12. Verfahren nach einem der Ansprüche 7 bis 11 mit dem folgenden zusätzlichen Merkmal:
a. Das Sprühmaterial weist eine Scherviskosität bei 23 °C (bestimmbar nach DIN 53019-1 / DIN EN ISO 3215) im Bereich von 80 bis 240 mPas auf.

13. Verfahren nach einem der Ansprüche 7 bis 12 mit mindestens einem der folgenden zusätzlichen Merkmale:
a. das Sprühmaterial ist dafür ausgebildet, eine verfestigte Schutzschicht zu bilden, deren Streckdehnung bis zum Einreißen mindestens 4 % beträgt, und/oder
b. die mittlere Schichtdicke beträgt zwischen 5 µm und 0,5 mm und/oder
c. das Sprühmaterial umfasst eine schichtbildende Komponente und gegebenenfalls ein Lösungs- oder Dispergiermittel, in der die schichtbildende Komponenten gelöst oder dispergiert vorliegt und/oder
d. das Sprühmaterial umfasst Reservoirs mit branderstickenden oder brandhemmenden Inhaltsstoffen die in die Schutzschicht eingebettet werden und/oder
e. das Sprühmaterial ist selbst elektrisch nicht leitend ausgebildet und/oder dafür ausgebildet, eine elektrisch isolierende Schutzschicht zu bilden.

14. Verfahren nach einem der Ansprüche 8 bis 13 mit dem folgenden zusätzlichen Merkmal:
a. Die Schichtdicke der Schutzschicht liegt zwischen 5 µm und 50 µm.

## Claims

1. Motor vehicle battery module (100) having an energy content of at least 5 kWh and having the following features:
a. the battery module (100) comprises multiple individual batteries (20), each of which has at least one housing (22) and at least one galvanic cell (24) disposed within the housing, and
b. the battery module comprises a joining device (50, 60), by means of which the individual batteries (20) are assembled to form a battery module (100) that can be handled as a whole,
**characterized by** the feature that:
c. the battery module (100) has, on its outside, a spray-applied protective layer (104) that comprises a wax and surrounds at least sections of the battery module (100), wherein
d. the wax is intercalated in a matrix composed of a solidified binder, wherein the wax has a solidification point in the range from 30 to 95°C and the binder after solidification has a thermal stability of at least 100°C.

2. Motor vehicle battery module (100) according to Claim 1 having the following additional features:
a. the joining device (60) comprises an outer housing (62) that completely surrounds the individual batteries (20), and
b. the protective layer (104) has been applied to the outside of the outer housing (62) and at least predominantly covers this outside surface.

3. Motor vehicle battery module (100) according to Claim 1 having the following additional features:
a. the joining device (50) only partly surrounds the individual batteries, such that outer faces of the housing (22) of the individual batteries (20) simultaneously form the outer face of the battery module (100), and
b. the protective layer (104) takes the form of a common protective layer that covers at least the outer faces of the housing (22) of a multitude of individual batteries (20).

4. Motor vehicle (120) having an electric drive motor (122) and at least one motor vehicle battery module (100) for supply of the electric drive motor (122) having the following feature:
a. the motor vehicle has at least one battery module (100) having a multitude of individual batteries (20) that are assembled together to form a battery module (100) having an energy content of at least 5 kWh,
**characterized by** the following feature:
b. the battery module (100) is designed according to any of Claims 1 to 3.

5. Motor vehicle (120) according to Claim 4 having the following feature:
a. the motor vehicle has a body (110) comprising a support structure (112) to accommodate one or more battery modules (100) and
b. the body (110) has been provided, in the region of the support structure (112), with a protective layer (114) that coats surfaces of the support structure (112), wherein the protective layer comprises a wax and wherein the wax is intercalated in a matrix composed of a solidified binder, wherein the wax has a solidification point in the range from 30 to 95°C and the binder after solidification has a thermal stability of at least 100°C.

6. Motor vehicle (120) according to Claim 4 or 5 having the following features:
a. a multitude of battery modules (100) is present in a support structure (112), and
b. this multitude of battery modules (100) is collectively covered by means of at least one further spray-applied protective layer (115) and/or the multitude of battery modules (100) is covered by a common lid (116), on the outside of which a further spray-applied protective layer (117) has been provided.

7. Process for producing a motor vehicle battery module (100) having an energy content of at least 5 kWh and having the following features:
a. multiple individual batteries (20), each comprising at least one galvanic cell (24) and a housing (22) within which the at least one cell (24) is present, are joined to one another by means of a joining device (50, 60) to give a battery module (100) that can be handled as a whole, and
b. a protective layer (104) of a sprayable spray material that comprises a wax and is suitable for solidification is applied by means of a spraying operation to the outside of the battery module (100), and forms, after solidification, the protective layer (104) that surrounds at least sections of the battery module, wherein
c. the spray material, aside from the wax, as a further layer-forming component, includes a binder which, after solidification, forms a matrix into which the wax is intercalated, wherein the wax has a solidification point in the range from 30 to 95°C and the binder after solidification has a thermal stability of at least 100°C.

8. Process according to Claim 7 having the following additional feature:
a. the spray material includes, as wax, a paraffin wax having a solidification point in the range from 30 to 95°C.

9. Process according to any of the preceding claims having the following additional feature:
a. the binder is a binder crosslinkable by oxidation and/or by means of radiation.

10. Process according to any of Claims 7 to 9 having the following additional feature:
a. the spray material comprises a mineral oil as carrier component.

11. Process according to any of Claims 7 to 10 having the following additional feature:
a. the spray material is free of solvents that have to be removed in the solidification of the layer-forming components.

12. Process according to any of Claims 7 to 11 having the following additional feature:
a. the spray material has a shear viscosity at 23°C (determinable to DIN 53019-1 / DIN EN ISO 3215) in the range from 80 to 240 mPas.

13. Process according to any of Claims 7 to 12 having at least one of the following additional features:
a. the spray material is designed to form a solidified protective layer having an elongation at yield of at least 4%, and/or
b. the average layer thickness is between 5 µm and 0.5 mm and/or
c. the spray material comprises a layer-forming component and optionally a solvent or dispersant in which the layer-forming component is dissolved or dispersed and/or
d. the spray material comprises reservoirs containing fire-smothering or fire-inhibiting contents that are embedded into the protective layer and/or
e. the spray material is itself electrically nonconductive and/or designed to form an electrically insulating protective layer.

14. Process according to any of Claims 8 to 13 having the following additional feature:
a. the thickness of the protective layer is between 5 µm and 50 µm.

## Revendications

1. Module de batterie de véhicule automobile (100) doté d'une capacité énergétique d'au moins 5 kWh et avec les caractéristiques suivantes :
a. le module de batterie (100) comprend plusieurs batteries individuelles (20), lesquelles comportent respectivement au moins un boîtier (22) et respectivement au moins une cellule galvanique (24) agencée dans le boîtier, et
b. le module de batterie comprend un dispositif de raccordement (50, 60), au moyen duquel les batteries individuelles (20) sont assemblées en un module de batterie (100) manipulable dans son ensemble,
**caractérisé par** le point :
c. le module de batterie (100) comporte sur sa face extérieure une couche protectrice (104) pulvérisée comprenant une cire et entourant au moins par sections le module de batterie (100), dans lequel
d. la cire est disposée dans une matrice faite d'un liant solidifié, dans lequel la cire comporte un point de solidification dans un intervalle de 30 à 95 °C et le liant après prise comporte une stabilité thermique d'au moins 100 °C.

2. Module de batterie de véhicule automobile (100) selon la revendication 1 avec les caractéristiques supplémentaires suivantes :
a. le dispositif de raccordement (60) comprend un boîtier externe (62) entourant entièrement les batteries individuelles (20), et
b. la couche protectrice (104) est appliquée sur la face extérieure du boîtier externe (62) et recouvre cette face extérieure au moins en majeure partie.

3. Module de batterie de véhicule automobile (100) selon la revendication 1 avec les caractéristiques supplémentaires suivantes :
a. le dispositif de raccordement (50) n'entoure que partiellement les batteries individuelles, de sorte que les surfaces extérieures des boîtiers (22) des batteries individuelles (20) forment simultanément la surface extérieure du module de batterie (100), et
b. la couche protectrice (104) est réalisée comme couche protectrice commune recouvrant au moins les surfaces extérieures des boîtiers (22) d'une pluralité de batteries individuelles (20).

4. Véhicule automobile (120) doté d'un moteur d'entraînement électrique (122) et d'au moins un module de batterie de véhicule automobile (100) destiné à alimenter le moteur d'entraînement électrique (122) avec les caractéristiques suivantes :
a. le véhicule automobile dispose d'au moins un module de batterie (100) doté d'une pluralité de batteries individuelles (20), lesquelles sont assemblées l'une à l'autre en un module de batterie (100) doté d'une capacité énergétique d'au moins 5 kWh,
**caractérisé par** le point suivant :
b. le module de batterie (100) est réalisé selon l'une des revendications 1 à 3.

5. Véhicule automobile (120) selon la revendication 4 avec les caractéristiques suivantes :
a. le véhicule automobile comporte une carrosserie (110) comprenant une structure portante (112) destinée à accueillir un ou plusieurs modules de batterie (100) et
b. la carrosserie (110) est prévue dans la zone de la structure portante (112) avec une couche protectrice (114) enrobant la surface de la structure portante (112), dans lequel la couche protectrice (114) comprend une cire et dans lequel la cire est disposée dans une matrice faite d'un liant pris, dans lequel la cire comporte un point de solidification dans un intervalle de 30 à 95 °C et le liant après prise comporte une stabilité thermique d'au moins 100 °C.

6. Véhicule automobile (120) selon la revendication 4 ou 5 avec les caractéristiques suivantes :
a. dans une structure portante (112) est contenue une pluralité de modules de batterie (100), et
b. cette pluralité de modules de batterie (100) est conjointement recouverte au moyen d'une couche protectrice pulvérisée supplémentaire (115) et/ou la pluralité de modules de batterie (100) est recouverte par un couvercle commun (116) dont la face extérieure est prévue avec une couche protectrice pulvérisée supplémentaire (117).

7. Procédé de fabrication d'un module de batterie de véhicule automobile (100) doté d'une capacité énergétique d'au moins 5 kWh et avec les caractéristiques suivantes :
a. plusieurs batteries individuelles (20), comprenant respectivement au moins une cellule galvanique (24) et un boîtier (22) à l'intérieur duquel est contenue l'au moins une cellule galvanique (24), sont raccordées l'une à l'autre au moyen d'un dispositif de raccordement (50, 60) en un module de batterie (100) manipulable dans son ensemble, et
b. sur la face extérieure du module de batterie (100) est appliquée au moyen d'un processus de pulvérisation une couche protectrice (104) faite d'un matériau pour pulvérisation qui est pulvérisable, comprend une cire et est adapté à la prise, lequel forme après prise la couche protectrice (104) entourant au moins par sections le module de batterie, dans lequel
c. le matériau pour pulvérisation comporte outre la cire un liant comme composant supplémentaire filmogène, lequel forme une matrice après la prise au sein de laquelle la cire est disposée, dans lequel la cire comporte un point de solidification dans un intervalle de 30 à 95 °C et le liant après prise comporte une stabilité thermique d'au moins 100 °C.

8. Procédé selon la revendication 7 avec la caractéristique supplémentaire suivante :
a. le matériau pour pulvérisation comporte comme cire une cire de paraffine avec un point de solidification dans un intervalle de 30 à 95 °C.

9. Procédé selon l'une des revendications 7 et 8 avec la caractéristique supplémentaire suivante :
a. le liant est un liant réticulable par oxydation et/ou par irradiation.

10. Procédé selon l'une des revendications 7 à 9 avec la caractéristique supplémentaire suivante :
a. le matériau pour pulvérisation comprend une huile minérale comme composant porteur.

11. Procédé selon l'une des revendications 7 à 10 avec la caractéristique supplémentaire suivante :
a. le matériau pour pulvérisation est dépourvu de solvants devant être enlevés lors de la prise des composants filmogènes.

12. Procédé selon l'une des revendications 7 à 11 avec la caractéristique supplémentaire suivante :
a. le matériau pour pulvérisation comporte une viscosité dynamique à 23 °C dans un intervalle de 80 à 240 mPas (déterminable selon DIN 53019-1/DIN EN ISO 3215).

13. Procédé selon l'une des revendications 7 à 12 avec au moins une des caractéristiques supplémentaires suivantes :
a. le matériau pour pulvérisation est réalisé de façon à former une couche protectrice prise, dont l'élasticité jusqu'à déchirure vaut au moins 4 %, et/ou
b. l'épaisseur moyenne de la couche vaut entre 5 µm et 0,5 mm et/ou
c. le matériau pour pulvérisation comprend un composant filmogène et, le cas échéant, un solvant ou un agent dispersant au sein duquel le composant filmogène est présent en solution ou comme dispersion et/ou
d. le matériau pour pulvérisation comprend des réservoirs d'ingrédients ignifuges ou extincteurs lesquels sont incorporés dans la couche protectrice et/ou
e. le matériau pour pulvérisation est lui-même électriquement non conducteur et/ou est réalisé de façon à former une couche protectrice électriquement isolante.

14. Procédé selon l'une des revendications 8 à 13 avec la caractéristique supplémentaire suivante :
a. l'épaisseur de la couche protectrice est comprise entre 5 µm et 50 µm.
